Europäisches Patentamt

European Patent Office

Office européen des brevets

(11) Veröffentlichungsnummer: **0 229 896**
**B1**

(12) **EUROPÄISCHE PATENTSCHRIFT**

(45) Veröffentlichungstag der Patentschrift: **19.09.90**

(21) Anmeldenummer: **86114933.4**

(22) Anmeldetag: **27.10.86**

(51) Int. Cl.⁵: **B 64 C 27/82**

(54) **Fluggerät, insbesondere Drehflügelfluggerät in der Art eines Flugschraubers für höhere Fluggeschwindigkeiten.**

(30) Priorität: **06.11.85 DE 3539338**

(43) Veröffentlichungstag der Anmeldung:
**29.07.87 Patentblatt 87/31**

(45) Bekanntmachung des Hinweises auf die
Patenterteilung:
**19.09.90 Patentblatt 90/38**

(84) Benannte Vertragsstaaten:
**DE FR GB IT**

(56) Entgegenhaltungen:
**FR-A-1 400 834**
**US-A-3 138 349**

(73) Patentinhaber: **DORNIER GMBH**
**Postfach 1420**
**D-7990 Friedrichshafen 1 (DE)**

(72) Erfinder: **Zimmer, Herbert, Dr.-Ing.**
**Virchowstrasse 21**
**D-7990 Friedrichshafen (DE)**

(74) Vertreter: **Landsmann, Ralf, Dipl.-Ing.**
**Kleeweg 3**
**D-7990 Friedrichshafen 1 (DE)**

Courier Press, Leamington Spa, England.

## Beschreibung

Die Erfindung betrifft Fluggeräte, insbesondere Drehflügelfluggeräte für hohe Vorwärtsfluggeschwindigkeiten, mit einem. Vertikalschub erzeugenden Hauptrotor und einem vom Hauptrotor getrennt wirkenden Vorwärtsschub erzeugenden Propellerantrieb, sowie einer der Luftschraube des Propellerantriebes nachgeordneten Giersteuerung bzw. Giermomenten-Ausgleichssteuerung.

Bei Hubschraubern wird in bekannter Weise Auftrieb und Vortrieb durch den Hauptrotor erzeugt. Der Rotor übernimmt dabei auch die Funktion der Lagesteuerung. Für den Drehmomentenausgleich und die Steuerung um die Hochachse dient ein Heckrotor, dessen Achse senkrecht zur Flugrichtung steht. Hubschrauber der genannten Art besitzen optimale Schwebeflugeigenschaften, sind aber Flächenflugzeugen im Hinblick auf Geschwindigkeit, Reichweite und Wirtschaftlichkeit unterlegen. Der Grund für die begrenzte Vorwärtsgeschwindigkeit liegt darin, dass sich bei zunehmender Vorwärtsgeschwindigkeit die Anströmgeschwindigkeit an den vorlaufenden Rotorblättern der Schallgeschwindigkeit annähert, wobei der Widerstand stark ansteigt. Bei den rücklaufenden Rotorblättern hingegen reisst die Strömung über grosse Bereiche der Rotorblätter infolge hoher Blattanstellwinkel ab und ausserdem werden bei hohen Vorwärtsfluggeschwindigkeiten grosse Bereiche der Rotorblätter von rückwärts angeströmt.

Zur Erweiterung der Einsatzgrenzen von Drehflügelflugzeugen durch Steigerung der Marschfluggeschwindigkeit, sind eine Reihe unterschiedlicher Entwicklungen bekannt geworden, wie z.B. der Einsatz schnellflugfähiger Koaxialrotoren (advancing-blade concept), stillsetzbare Rotoren, mit Zirkulationssteuerung mittels Ausblasen von Luft aus Längsschlitzen an den Rotorblättern (X-wing-concept), auch zur Erzielung einer höherharmonischen Blattansteuerung, oder auch Rotoren mit gesteuerten, aerodynamischen Stellflächen an der Hinterkante der Rotorblätter.

Um den Einsatzbereich von Hubschrauberrotoren zu höheren Fluggeschwindigkeiten hin zu erweitern, muss grundsätzlich die Fortschrittsgrad-Grenze überwunden werden, welche dann erreicht ist, wenn die rücklaufenden Blätter infolge Strömungsablösung den geforderten Auftrieb nicht mehr erzeugen können.

Getrennt vom Hauptrotor wirkende Schuberzeuger für Vorwärtsschub und ebenso Giersteuereinrichtungen zum Ausgleich von Giermomenten an Drehflügelflugzeugen gehören zum allgemeinen Stand der Technik.

Es ist dazu bekannt, die Anordnung eines Propellerantriebes auf dem Fluggeräterumpf eines Drehflügelflugzeuges mit einer Druckschraube vor dem Leitwerk.

Es ist auch bekannt, bei Drehflüglern eine schwenkbaren Heckrotor zum Vorwärtsschub bzw. zum Drehmomentenausgleich und eine um eine senkrechte Achse schwenkbare Seitenleitwerksfläche anzuordnen, wobei die Leitwerksfläche stromauf vor dem Propeller liegt.

Ein Aufbau bei Drehflüglern der genannten Art ist bekannt, der ebenfalls einen, um eine vertikale Achse schwenkbaren Propeller mit Druckschraube am Fluggeräteheck in Verbindung mit einer Seitensteuerfläche aufweist.

Getrennt vom Hauptrotor wirkende Schuberzeuger für den Horizontalflug und ebenso Steuereinrichtungen zum Ausgleich von Giermomenten und zur Gier- und Seitensteuerung gehören zum allgemeinen Stand der Technik.

So zeigt die dem Oberbegriff des Anspruchs 1 entsprechende FR—PS 1 400 834 eine Luftschraubenanordnung stromab vor einem Seitenruder in Verbindung mit am Rumpfheck angeordneten die Luftschraube übergreifenden Trägerteilen. Ferner ist es bekannt, am Fluggeräteheck von Drehflüglern einen Mantelpropeller zur Vortriebserzeugung mit in der Propellernachlaufströmung liegendem Seitenleitwerk anzuordnen.

Ebenso ist eine Ablenkeinrichtung für die Propellernachlaufströmung in Verbindung mit einem ummantelten Propeller am Rumpfheck eines Drehflüglers bekannt, wobei die Ablenkeinrichtung ein schwenkbares Schaufelgitter enthält. Die im Profil symmetrischen Schaufeln des Ablenkgitters sind babei in bezug auf ihre Wölbung veränderbar ausgeführt.

Aufgabe der Erfindung ist es, einen Flugschrauber für hohe Marschgeschwindigkeiten durch besondere Anordnung und Ausbildung der Vorwärtsschub erzeugenden Einrichtung im Zusammenwirken mit einer Einrichtung zur Giersteuerung bzw. zum Giermomentenausgleich gegenüber dem Vertikalschub erzeugenden Hauptrotor sowohl hinsichtlich einer Verringerung der aerodynamischen Verluste als auch im Hinblick auf den Bauaufwand zu verbessern.

Ferner soll die erfindungsgemässe Ausbildung das Auftreten schwer beherrschbarer Kreiselkräfte, hervorgerufen durch die Vorwärtsschub erzeugende Einrichtung, vermeiden und eine Herabsetzung des Strukturgewichts gegenüber bekannten Ausbildungen erreichen.

Die gestellte Aufgabe ist erfindungsgemäss durch eine Ausbildung nach den Merkmalen des Hauptanspruchs und in weiterer vorteilhafter Ausgestaltung nach den Merkmalen weiterer, dem Hauptanspruch nachgeordneter Ansprüche gelöst.

Bei dem erfindungsgemäss ausgebildeten Flugschrauber wird durch die Anordnung einer freifahrenden Luftschraube erreicht, dass die Strahlruder bzw. Seitenruder in einem Abschnitt des Propellernachlaufstrahls, in dem erhöhte Strahlgeschwindigkeit herrscht, liegen.

Die Strahlruder liegen günstig zu beiden Seiten der senkrechten Fluggeräte-Längsmittelebene im Propellernachlaufstrahl, ohne die z.B. bei Schaufelgittern auftretenden Strömungsverluste in Kauf nehmen zu müssen. Die Anordnung der Strahlruder, relativ weit hinter der Luftschraubendrehebene, vermeidet Beeinträchtigungen des Propellerschubstrahles und ermöglicht die Erzeugung relativ hoher Steuerkräfte.

Schwer beherrschbare Kreiselmomente, wie sie bei schwenkbaren Propellern, auch bei ummantelten Propellern auftreten, sind hier vermieden.

Die Strahlruder bzw. Seitenruder erlauben rasche Giersteuerbewegungen bzw. rasche Gierausgleichsbewegungen.

Die Anordnung und Ausbildung des Trägergestells lässt eine Lage für die Luftschraube in einem axialen Abstand von der Höhensteuerfläche zu, die eine Beeinträchtigung des Propellerstrahls vermindert. Ferner ermöglicht das Trägergestell eine Reduzierung des Strukturgewichts durch Ausnutzung von ohnehin vorhandenden Elementen der Höhen- bzw. Seitensteuerung. Die Anordnung trägt auch dazu bei, die Ausbildung des Luftwiderstands durch das Trägergestell gering zu halten.

Das Trägergestell in der erfindungsgemässen Ausbildung erlaubt die Anordnung des Höhenleitwerks so, dass das Leitwerk bei sämtlichen Ausschlagwinkeln den Propeller so wenig als möglich stört, und ferner liegen das Höhenruder und die Höhenstabilisierungsflosse weitgehend ausserhalb des Abwindstrahls des Hauptrotors, wodurch ungünstige Überlagerungsbeeinflussungen der Nicksteuerung durch den Hauptrotor-Abwindstrahls vermieden sind.

Infolge der Ausbildung der Strahlruder als profilierte Hochauftriebsklappen, wird ein entgegen dem Drehmoment des Hauptrotors auch in neutraler Lage der Ruder wirksames Gegenmoment erzeugt und die Seitensteuerkräfte werden verstärkt. Die abschliessbaren Strömungsspalte der Ruder vermeiden bei grossen Ausschlagwinkeln eine Strömungsablösung. Das als Balanceruder ausgebildete Höhenruder ist mittels des Trägergestells ausserhalb des Abwindstrahls des Hauptrotors unter Vermeidung der Beeinträchtigung der Nicksteuerung angeordnet.

Bei Fluggeräten der genannten Art ist noch von Bedeutung, dass im Schnellflug fast die gesamte Leistung der Triebwerke zur Vortriebserzeugung herangezogen wird, wobei praktisch keine Strahlablenkung auftritt. Das Restdrehmoment wird durch die entsprechend eingestellten Strahlruder erzeugt.

Im Schwebeflug ist zwar die stärkste Strahlablenkung notwendig, aber die dabei erforderliche Leistung des Schuberzeugers ist nur gering.

Der Rastvorwärtsschub, der im Schwebeflug dadurch erzeugt wird, dass die Ablenkung des Abstroms des Schuberzeugers geringer als 90° ist, wird durch Anstellung bzw. Rotorneigung nach hinten kompensiert. Da der Hauptrotor als Tragschrauber wirkt, ist dieser ohnehin mehr positiv eingestellt, als bei konventionell aufgebauten Drehflügelfluggeräten.

Die Anordnung des Propellers in Verbindung mit den Strahlrudern lässt vorteilhafter Weise rasche Änderungen des Schubvektors zu, im Gegensatz zu bekannten Anordnungen, bei denen der gesamte Propeller geschwenkt wird, was zu unerwünschten Kreiselmomenten führt.

In der Zeichnung ist eine beispielsweise Ausführungsform gemäss der Erfindung dargestellt, die anhand der nachfolgenden Beschreibung näher erläutert ist.

Es zeigen:

Figur 1 eine perspektivische Gesamtansicht des Flugschraubers,

Figuren 2 bis 2b eine Dreiseitenansicht des Fluggerätehecks mit der dem Propeller für die Vortriebserzeugung zugeordneten, mittels Strahlrudern arbeitenden Giersteuerung,

Figur 2c eine Einzelheit der Steuerflächenausbildung gemäss Figuren 2 bis 2b und

Figur 3 die Seitenansicht eines Flugschraubers in Verbindung mit dem Vorwärtsschuberzeuger und den Strahlrudern in Start- und Schwebefluglage.

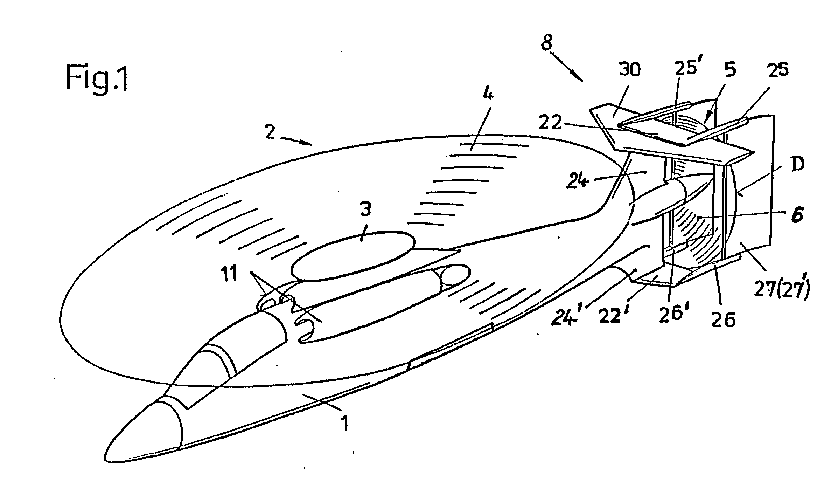

Gemäss Figur 1 sind als Hauptkomponenten des Flugschraubers mit 1 die Fluggerätezelle, mit 2 der den Rotorkopf 3 und die Rotorblätter 4 enthaltende, zur Erzeugung von Vertikalschub dienende Hauptrotor, mit 6 die zur Vorwärtsschuberzeugung dienende Luftschraube und allgemein mit 7 die zur Steuerung des Fluggerätes um die Hochachse dienende Einrichtung bezeichnet.

Für den Antrieb des Hauptrotors 2 und den Propeller 5 ist eine beiden gemeinsame Antriebsanlage 11 vorgesehen, die über eine Getriebeeinheit an den Hauptrotor 2 und den Propeller 5 anschliesst.

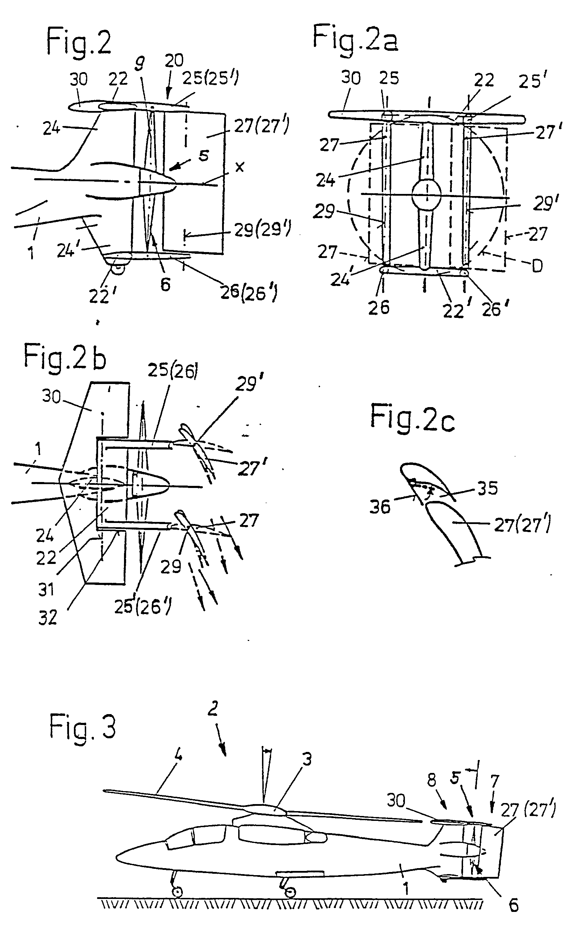

Gemäss den Einzelheiten des gezeigten Ausführungsbeispiels in den Figuren 2 bis 2c sind im Bereich des Heckteils der Fluggerätezelle 1 die Giersteuerung 7, die Nicksteuerung B, sowie der vorwärtsschuberzeugende Propeller 5 mit seiner als Druckschraube arbeitenden Luftschraube 6 angeordnet, wobei die über ein Propellerverstellgetriebe allgemein bekannter Bauart verstellbaren Luftschraubenblätter mit 9 bezeichnet sind. Am Fluggeräteheck ist für die schwenkbare Aufnahme der Strahl- bzw. Seitenruder 27 bzw. 27' ein Trägergestell (Trägerrahmen) 20 vorgesehen, das sich zumindest zu einem wesentlichen Teil aus Elementen zusammensetzt, die für die Fluggerätesteuerung bzw. Stabilisierung ohnehin vorhanden sind.

Am Fluggeräteheck sind in der senkrechten Fluggeräte-Längsmittelebene, die sich nach oben und unten erstreckenden Abschnitte 24 bzw. 24' der feststehenden Seitenstabilisierungsflosse vorgesehen. Die Abschnitte 24 bzw. 24' der Seitenstabilisierungsflosse tragen an ihrem freien Ende in Doppel-T-Anordnung eine obere bzw. untere Höhenleitwerksflosse 22 bzw. 22' (Stabilisierungsflosse).

An der oberen bzw. unteren Höhenleitwerksflosse 22 bzw. 22' ist je ein Paar sich inhorizontaler Richtung nach rückwärts erstreckender Trägerteil (Trägerarme) 25 bzw. 25' und 26 bzw. 26' befestigt, die die Luftschraube 6 in geringem Abstand übergreifen.

Die oberen bzw. unteren Seitenruderträger arme 25, 26 bzw. 25', 26' dienen zur Aufnahme der vertikalen Schwenkachsen 29 bzw. 29' der Seitenruder bzw. Strahlruder 27 bzw. 27' für eine Anordnung hinter der Luftschraube 6 im Luftschrauben-Nachlaufstrahl. Das Trägergestell 20 ist somit gebildet durch die Seitenstabilisierungsflosse 24, 24', die daran festen Höhenstabilisierungsflossen 22 bzw. 22' in Verbindung mit den Schwenkachsen 29 bzw. 29' für die Strahlruder 27 bzw. 27', sowie die an den Höhenstabilisierungsflossen 22 bzw. 22' befestigten Träger 25 bzw. 25' und 26 bzw. 26', die als zusätzliche Teile zu den ohnehin vorhandenen Stabilisierungs- und Steuerelementen anzusehen sind.

Die Träger arme 25 bzw. 25' und 26 bzw. 26' liegen bei der gezeigten Ausführung in bezug auf die Anströmung innerhalb oder zumindest zum grössten Teil innerhalb der Querschnittsfläche der Höhenleitwerksflossen 22 bzw. 22', so dass durch die Anordnung der Träger eine Erhöhung des Luftwiderstandes vermieden ist.

Die Anordnung und Ausbildung des Trägergestells 20 stellt eine verwindungssteife Rahmenkonstruktion dar, durch die der Propeller- bzw. Luftschraubenstrahl ungestört bleibt. Ebenso ist auch die Anströmung der Strahlruder 27 bzw. 27' ohne Störung durch das Trägergestell.

Bei der vorliegenden Ausführung sind für die Giersteuerung bzw. die Giermomentenausgleichssteuerung zu beiden Seiten der Fluggeräte-Längsmittelebene je ein Strahlruder vorgesehen und damit die z.B. bei Schaufelgittern mit einer grösseren Anzahl von Schaufeln auftretenden Querschnittsverengungen bzw. Strömungsverluste weitgehend vermieden.

Die Luftschrauben-Nachlaufströmung bleibt somit bei in Neutralstellung befindlichen Strahlrudern 27 bzw. 27' weitgehend ungestört, und auch in Ablenkstellung der Strahlruder 27 bzw. 27' sind die Rückwirkungen auf die Luftschraube durch die Ruder 27 bzw. 27' auch infolge des relativ grossen Abstandes relativ gering.

Bei der gezeigten Ausführung liegen die Strahlruder 27 bzw. 27' auch in Ausschlagstellung vollständig bzw. im wesentlichen innerhalb des Nachlaufstroms des Propellers 6.

Das Höhenruder 30 ist in der Art eines Balanceruders um eine horizontale Achse 31 schwenkbar am oberen Teil 24 der Seitenstabilisierungsflosse und zumindest zu einem wesentlichen Teil vor der oberen Höhensteuerflosse 22 schwenkbar gelagert. Das Höhenruder 30 weist rückwärtig eine Ausnehmung 32 auf und umgreift somit die Höhenstabilisierungsflosse 22 auf einem Teil ihrer Profiltiefe. Das Höhenruder 30 liegt in der gezeigten Anordnung zumindest zum grössten Teil oberhalb des Durchmessers des Propellerdrehkreises D und erstreckt sich seitlich in horizontaler Richtung über den Durchmesser des Propellerdrehkreises D hinaus. Die Balanceruderanordnung und die Anordnung des Höhenleitwerks als T-Leitwerk lässt eine Lage für das Höhenruder 30 zu, in der das Ruder auch im ausgeschlagenem Zustand den Propeller 5 bzw. die Luftschraube 6 nicht oder nur in geringem Maße stört.

Gemäss Figur 2c sind die Strahlruder 27 bzw. 27', die als profilierte Hochauftriebsklappen ausgelegt sind, mit einem Strömungsspalt 35 bekannter Wirkungsweise versehen. Der Strömungsspalt 35 ist durch eine Klappe 36 an der Unterseite des Profils der Strahlruder 27 bzw. 27' abschliessbar.

Die Klappe 36 verschliesst hierbei unter Federwirkung von innen her den Spalt 35 und wird bei hohen Ausschlagwinkeln der Ruder 27 bzw. 27' zur Freigabe des Spaltes 36 nach innen für die Durchströmung mittels des Strömungsdruckes selbsttätig bewegt.

Die Wirkungsweise des beschriebenen Flugschraubers ist wie folgt:

Der Vortrieb des Fluggerätes sowie der Drehmomentenausgleich erfolgt mittels des Druckpropellers 5 und den diesem zugeordneten Seitenrudern 27 bzw. 27'. Ein Vorteil der Anordnung des Propellers 5 bzw. der Luftschraube 6 in Verbindung mit den Strahlrudern 27 bzw. 27' beruht darauf, dass eine rasche Änderung des Schubvektors bei Ausschlag der Strahlruder ermöglicht ist.

Im Schwebeflug erfolgt der Drehmomentenausgleich durch den Ausschlag der Strahlruder 27 bzw. 27'. Im Reiseflug wird annähernd die gesamte, von der Antriebsanlage 11 erzeugte Leistung auf den Druckpropeller 5 übertragen. Dabei wird das restliche Rotorgegendrehmoment durch die Strahlruder 27 bzw. 27' erzeugt. Der Restvorwärtsschub, der im Schwebeflug dadurch erzeugt wird, dass die Strahlablenkung (Strömungsablenkung) geringer als 90° ist, wird durch Anstellung, das heisst durch Neigung des Rotors 2 nach hinten kompensiert. Da der Hauptrotor 2 als Tragschraube wirkt, weist der Rotor 2 eine mehr positive Einstellung gegenüber konventionellen Hubschraubern auf.

Neben der Vortriebserzeugung im Reiseflug wird mittels der Luftschraube 6 in Verbindung mit den Strahlrudern 27 bzw. 27' erreicht, dass das Fluggerät praktisch ohne Rumpfneigung stark beschleunigt bzw. stark verzögert werden kann.

**Patentansprüche**

1. Drehflügelfluggerät für höhere Fluggeschwindigkeiten enthaltend
einen im wesentlichen Vertikalschub erzeugenden Hauptrotor (2),
einen vom Hauptrotor getrennt wirkenden Vorwärtsschub (Horizontalschub) erzeugenden Luftschraubenantrieb mit einer freifahrenden Luftschraube (6) im Bereich des Fluggerätehecks, das als eine sich nach oben und nach unten von Rumpf erstreckende Seitenstabilisierungsflosse (24, 24') aufweisender Trägerrahmen (20) ausgebildet ist un ein im Luftschraubennachlaufstrom angeordnetes mittels Strahlablenkung zur Giersteuerung arbeitendes Seitenruder (27, 27') aufnimmt, dadurch gekennzeichnet, daß der durch die Seitenstabilisierungsflosse und eine daran befestigte obere (22) un daran befestigte untere (22') Höhenstabilisierungsflosse (22, 22') gebildete Trägerrahmen (20) eine Doppel-T-Struktur bildet, die je ein zu beiden Seiten der senkrechten Längsmit-

telebene im Luftschraubennachlaufstrom ange- ordnetes Seiten (27, 27') besitzt, wobei die Höhen- stabilisierungsflossen vor der Luftschraube ange- ordnet sind und starre sich horizontal erstreckende Trägerarme (25, 25'; 26, 26') aufweisen, welche einerseits die Luftschraube (6) umgreifen und andererseits eine Lagerung für die Seitenruder (27, 27').

2. Fluggerät nach Anspruch 1, gekennzeichnet durch eine für die Fluggerätesteuerung um die Querachse ausgebildete Höhensteuerung (22 30, 31), die sich in T-Anordnung von der Seitenstabilisierungsflosse (24, 24') erstreckt.

3. Fluggerät nach Anspruch 1 oder 2, dadurch gekennzeichnet, daß die Höhensteuerung (22, 30, 31) als Balanceruder (30; 31) ausgeführt ist.

4. Fluggerät nach Anspruch 1 bis 3, dadurch gekennzeichnet, daß die durch jeweils zwei obere bzw. zwei untere Trägerarme gebildeten Trägerarmpaare (25, 25'; 26, 26') in bezug auf den Durchmesser der Luftschraube (6) in geringst möglichem Abstand angeordnet sind.

5. Fluggerät nach Anspruch 3 oder 4, dadurch gekennzeichnet, daß das Balance-Höhenruder (30) eine Lage einnimmt, bei der zumindest ein Teil der Ruderfläche sich zu beiden Seiten der senkrechten Fluggeräte-Längsmittelebene über den Propellerdrehkreis (D) hinaus erstreckt.

6. Fluggerät nach Anspruch 3 bis 5, dadurch gekennzeichnet, daß das Balance-Höhenruder (30) durch eine Ausnehmung (32) im Bereich seiner Hinterkante die Höhensteuerflosse (22) umgreift.

7. Fluggerät nach Anspruch 1 bis 6, dadurch gekennzeichnet, daß die Seitenruder (27, 27') abschliessbare Strömungsspalte (35) aufweisen.

8. Fluggerät nach Anspruch 1 bis 7, dadurch gekennzeichnet, daß die Seitenruder (27; 27') bezüglich ihres seitlichen Abstandes von der senkrechten Längsmittelebene des Fluggerätes so angeordnet sind, daß die Ruder in Ausschlagstellung eine über den Propellerdrehkreis (D) gleich- mäßige Drosselung des Luftschrauben-Nachlauf- strahles bewirken.

9. Fluggerät nach Anspruch 1 bis 8, dadurch gekennzeichnet, daß die Seiten- bzw. Strahlruder (27; 27') als profilierte Hochauftriebsklappen ausgebildet sind und zur Seitensteuerung im wesentlichen aus der Neutrallage entgegen dem Drehmoment des Hauptrotors (2) verstellbar sind.

10. Fluggerät nach Anspruch 7 bis 9, dadurch gekennzeichnet, daß die die Strömungsspalte (35) der Seitenruder (27, 27') verschließenden Klappen (36) um Schwenkachsen mittels Beaufschlagung durch die Strömung bei hohen Anstellwinkeln der Seitenruder (27; 27') zur selbsttätigen Öffnung des Spaltes (35) schwenkbar sind.

11. Fluggerät nach Anspruch 1 bis 10, dadurch gekennzeichnet, daß der Propeller (5) drehmomentabhängig verstellbare Luftschraubenblätter (9) aufweist.

**Revendications**

1. Aéronef à voilure tournante pour vitesses de vol élevées, comportant

un rotor principal (2) créant une poussée sensiblement verticale,

une propulsion à hélice créant une poussée d'avancement (poussée horizontale), agissant séparément du rotor principal, équipée d'une hélice (6) tournant librement à proximité de l'arrière de l'appareil, qui est réalisée sous la forme d'un châssis porteur (20) comportant un plan de stabilisation de direction (24, 24') s'étendant vers le haut et vers le bas depuis le fuselage, et comprend un gouvernail de direction (27, 27') disposé dans le flux arrière de l'hélice, opérant par déviation du flux en vue d'une commande de lacet,

caractérisé en ce que le châssis porteur (20), formé par le plan de stabilisation de direction et un plan supérieur de stabilisation de profondeur (22) et un plan inférieur de stabilisation de profondeur (22') fixés à celui-ci, constitue une structure en double T possédant chacun un gouvernail de direction (27, 27') disposé dans le flux arrière de l'hélice des deux côtés du plan médian longitudinal vertical, les plans de stabilisation de profondeur étant disposés devant l'hélice et comportant des bras supports (25, 25'; 26, 26') rigides s'étendant horizontalement, qui, d'une part, entourent l'hélice et, d'autre part, forment un logement pour les gouvernails de direction (27, 27').

2. Aéronef selon la revendication 1, caractérisé par une commande de profondeur (22; 30, 31) réalisée selon l'axe transversal en vue de la commande de l'aéronef, qui s'étend dans la structure en T depuis les plans de stabilisation de direction (24, 24').

3. Aéronef selon la revendication 1 ou 2, caractérisé en ce que la commande de profondeur (22, 30, 31) est réalisée sous la forme d'un gouvernail à compensation (30; 31).

4. Aéronef selon l'une quelconque des revendications 1 à 3, caractérisé en ce que les paires de bras supports (25, 25'; 26, 26') formées chacune par deux bras supports supérieurs et deux bras supports inférieurs, respectivement, sont disposées à un écart minimal par rapport au diamètre de l'hélice (6).

5. Aéronef selon la revendication 3 ou 4, caractérisé en ce que le gouvernail de profondeur à compensation (30) prend une position dans laquelle au moins une partie de la surface du gouvernail s'étend des deux côtés du plan médian longitudinal vertical de l'appareil au-dessus du cercle (D) décrit par l'hélice.

6. Aéronef selon l'une quelconque des revendications 3 à 5, caractérisé en ce que le gouvernail de profondeur à compensation (30) entoure, grâce à un évidement (32) à proximité de son bord postérieur, le plan de commande de profondeur (22).

7. Aéronef selon l'une quelconque des revendications 1 à 6, caractérisé en ce que les gouvernails de direction (27, 27') comportent des fentes d'écoulement (35) pouvant être obturées.

8. Aéronef selon l'une quelconque des revendications 1 à 7, caractérisé en ce que les gouvernails de direction (27; 27') sont disposés, vis-à-vis de leur écart latéral du plan médian longitudinal vertical de l'appareil, de sorte que les gouvernails en position de déviation provoquent un étranglement uniforme sur le cercle (D) décrit par l'hélice du flux arrière de l'hélice.

9. Aéronef selon l'une quelconque des revendications 1 à 8, caractérisé en ce que les gouvernails de direction (27; 27') sont réalisés sous la forme de clapets ascensionnels profilés et sont réglables en vue de la commande de direction sensiblement depuis la position neutre à l'encontre du moment de rotation du rotor principal (2).

10. Aéronef selon l'une quelconque des revendications 7 à 9, caractérisé en ce que les clapets (36) obturant les fentes d'écoulement (35) des gouvernails de direction (27, 27') peuvent pivoter, autour d'axes de pivotement, par alimentation grâce à l'écoulement, dans le cas d'angles d'attaque élevés des gouvernails de direction (27; 27') en vue de l'ouverture automatique de la fente (35).

11. Aéronef selon l'une quelconque des revendications 1 à 10, caractérisé en ce que l'hélice (5) possède des pales (9) réglables en fonction du moment de rotation.

## Claims

1. Rotary wing aircraft for relatively high flying velocities comprising:

a main rotor (2) producing an essentially vertical thrust;

a propeller drive producing a forward thrust (horizontal thrust) acting separately from the main rotor and having an external propeller (6) in the region of the aircraft tail, which is in the form of a carrier frame (20) which comprises a lateral stabilising fin (24, 24') extending upwards and downwards from the fuselage, and a rudder (27, 27') which is disposed in the following stream of the propeller and operates by means of jet deflection in order to control yaw,

characterised in that the carrier frame (20), formed by the lateral stabilising fin and an upper height stabilising fin (22) secured thereto and a lower height stabilising fin (22') secured thereto, forms a double T-structure which comprises, on both sides of the vertical longitudinal central plane, in each case a rudder (27, 27') disposed in the propeller following stream, the height stabilising fins being disposed in front of the propeller and having rigid carrier arms (25, 25'; 26, 26') which extend horizontally and on the one hand extend around the propeller (6) and on the other hand form a bearing for the rudders (27, 27').

2. Aircraft according to claim 1, characterised by a height control (22; 30, 31) which is formed to control the aircraft about the transverse axis and extends in a T-arrangement from the lateral stabilising fins (24, 24').

3. Aircraft according to claim 1 or 2, characterised in that the height control (22, 30, 31) is in the form of a balanced control surface (30; 31).

4. Aircraft according to claims 1 to 3, characterised in that the carrier arm pairs (25, 25'; 26, 26'), formed in each case by two upper and two lower carrier arms, are disposed at the least possible distance in relation to the diameter of the propeller (6).

5. Aircraft according to claims 3 or 4, characterised in that the balanced height control surface (30) assumes a position in which at least part of it extends on both sides of the vertical aircraft longitudinal central plane above the described circle (D) of the propeller.

6. Aircraft according to claims 3 to 5, characterised in that the balanced height control surface (30) surrounds the height control fins (22) by means of a recess (32) in the region of its trailing edge.

7. Aircraft according to claims 1 to 6, characterised in that the rudders (27, 27') have closable flow slots (35).

8. Aircraft according to claims 1 to 7, characterised in that the rudders (27; 27') are disposed in such a way with respect to their lateral distance from the vertical longitudinal central plane of the aircraft that the rudders, in the deflecting position, throttle the following stream of the propeller uniformly over the described circle (D) of the propeller.

9. Aircraft according to claims 1 to 8, characterised in that the lateral or stream rudders (27; 27') are formed as profiled high lift flaps and can be adjusted for lateral control essentially from the neutral position against the torque of the main rotor (2).

10. Aircraft according to claims 7 to 9, characterised in that the flaps (36) closing the flow slots (35) in the rudders (27; 27') can be pivoted about pivoting axes by being acted upon by the flow when the rudders (27; 27') have high angles of incidence, in order to open the slots (35) automatically.

11. Aircraft according to claims 1 to 10, characterised in that the propeller (5) has propeller blades (9) which can be adjusted according to torque.

Fig.1

EP 0 229 896 B1

Fig.2

Fig.2a

Fig.2b

Fig.2c

Fig.3

2